# EUROPEAN PATENT APPLICATION

(11) **EP 4 644 241 A1**
(43) Date of publication of application: **05.11.2025**
(21) Application number: 22970107.3
(22) Date of filing: 27.12.2022
(51) Int. Cl.: B64D 9/00, B64U 10/16, B64U 101/40, B64U 101/67

(54) **WORK DEVICE AND WORK FLIGHT VEHICLE**

(71) Applicant: Kubota Corporation, Osaka 556-8601 (JP)
(72) Inventor: TORIMOTO Masaru, Sakai-shi, Osaka 590-0908 (JP)
(74) Representative: Cabinet Beau de Loménie
(86) International application number: PCT/JP2022/048370
(87) International publication number: WO 2024/142318

(57) **Abstract**

Provided is a work device and a work flight vehicle capable of performing work stably without detaching an object. A work device (4) from which an object (3) is capable of being suspended includes: a plurality of holders (41) configured to hold the object (3) in such a manner that the object (3) is suspended; an adjustment mechanism (42a) configured to adjust respective postures of the plurality of holders (41); and a control unit (43) configured to control operation of at least the adjustment mechanism (42a), the control unit (43) controlling the adjustment mechanism (42a) to change the respective postures of the holders (41) so as to counteract swinging of the object (3).

## Description

### Technical Field

The present invention relates to a work device connectable to a flight vehicle or the like, and a work flight vehicle.

### Background Art

Recently, work devices for transporting luggage (object) or moving work machinery (object) using a flight vehicle such as a drone have been considered. Patent document 1 discloses a drone equipped with a winch mechanism capable of winding a wire rope suspending luggage.

The work device described in Patent Document 1 includes a flight control unit that controls the posture and speed of a drone body, and an unfastening unit that unfastens the luggage based on the flying state of the drone body. If the flight of the drone is unstable, the unfastening unit cuts the wire rope using a cutting blade to unfasten the luggage. This measure is to reduce the weight of the drone and maintain safe flight.

### Prior Art Document

### Patent Document

Patent Document 1: JP 2022-125929A

### Disclosure of the Invention

### Problem to be Solved by the Invention

The work device described in Patent Document 1 detaches an object to stabilize the flight of the drone, so the work device has the inconvenience of not being able to transport the object to the destination and start work. Moreover, it is time-consuming to collect the detached object.

Accordingly, there is a demand for work devices and work flight vehicles capable of performing work stably without detaching an object.

### Means for Solving Problem

A work device according to the present invention relates to a work device from which an object is capable of being suspended, including: a plurality of holders configured to hold the object in such a manner that the object is suspended; an adjustment mechanism configured to adjust respective postures of the plurality of holders; and a control unit configured to control operation of at least the adjustment mechanism, wherein the control unit controls the adjustment mechanism to change the respective postures of the holders so as to counteract swinging of the object.

According to this configuration, since the adjustment mechanism changes the postures of the holders to counteract the swing of the object, it is possible to perform stable work even if the work device is mounted on a flight vehicle, for example. Also, since stable work is possible only by changing the postures of the holders, it is possible to easily solve the inconvenience of not being able to transport the object to the destination and start work. Note that the object is a concept that includes luggage, work machines such as mowers, and the like.

The following will describe suitable modes of the present invention. However, the scope of the present invention is not limited by the examples of the suitable embodiments described below.

In one embodiment of the work device according to the present invention, preferably, the control unit controls the adjustment mechanism so that the holders generate tension on the object.

According to this configuration, since the adjustment mechanism causes the holders to generate tension on the object, the holders can bring the object into an appropriate posture. Specifically, even when the object swings from side to side due to strong winds or the like and the holder in the swing direction is deflected, the loads on the holders can be made uniform by retracting the deflected holder and causing it to generate tension.

In one embodiment, preferably, the work device according to the present invention further includes: a swing detection unit configured to detect swinging of the object.

According to this configuration, since the swing detection unit configured to detect swinging of the object is provided, it is possible to perform appropriate control according to the swing direction.

In one embodiment of the work device according to the present invention, preferably, the control unit causes extension and contraction of a holder among the plurality of holders which holder is present in a direction of a change in swing acceleration of the object which swing acceleration has been detected by the swing detection unit.

According to this configuration, by extending or retracting the holder in a direction in which the swing acceleration is changed, a swing can be reliably suppressed. Particularly, the holder in a direction in which the swing acceleration is changed can efficiently reduce inertia force exerted on the object, thus making it possible to rapidly suppress the swing of the object.

In one embodiment, preferably, the work device according to the present invention further includes: a movement mechanism configured to move the plurality of holders in a horizontal direction, wherein the control unit controls the movement mechanism to increase a maximum separation distance between the plurality of holders, in response to an amount of swing of the object which amount of swing has been detected by the swing detection unit being greater than or equal to a predetermined value.

According to this configuration, by increasing the maximum separation distance between the plurality of holders in response to the amount of swing being greater than or equal to the predetermined value, it is possible to reduce inertia force associated with the swing of the object. As a result, oscillation of the work device transmitted by the swing of the object can be suppressed.

In one embodiment, preferably, the work device according to the present invention further includes: a position detection unit configured to detect respective positions of the holders and the object relative to each other.

If the relative positions of the holders and the object are detected as in this configuration, it will be possible to detect a swing in the horizontal direction, resulting in an improvement in the control performance of the adjustment mechanism.

In one embodiment, preferably, the work device according to the present invention further includes: a posture detection unit configured to detect a posture of the object, wherein the control unit causes adjustment of the respective postures of the holders with reference to detection information from the posture detection unit.

By using detection information on the object obtained by the posture detection unit as in this configuration, it is possible to maintain, for example, luggage in a horizontal posture.

In one embodiment of the work device according to the present invention, preferably, the control unit controls the adjustment mechanism to extend and contract the holders at a speed lower as the object weighs less.

If, as in this configuration, the extension/retraction speeds of the holders are increased the smaller the weight is, the swing can be rapidly counteracted when the weight is small, and if the extension/retraction speeds of the holders are decreased when the weight is large, it is possible to avoid a situation where sudden inertia force is applied to the object and the work device loses control.

A work flight vehicle according to the present invention includes: the above-described work device; and a flight vehicle, wherein the control unit causes adjustment of the respective postures of the holders with reference to moving speed information of the flight vehicle.

According to this configuration, even if, for example, the flight vehicle transitions from hovering flight to forward flight, the adjustment mechanism changes the postures of the holders to counteract the swing of the object, and thus stable work can be performed.

Further features and advantages of the present invention will become clearer with the description of the following exemplary and non-limiting embodiments, which are described with reference to the drawings.

### Brief Description of the Drawings

FIG. 1 is a perspective view showing a working state of a work flight vehicle.
FIG. 2 is a block diagram showing the work flight vehicle.
FIG. 3 is a perspective view showing the working state of the work flight vehicle according to a modification.
FIG. 4 shows an example of control of a work device in side views.
FIG. 5 shows an example of control of the work device in top views.
FIG. 6 is a plan view of a work flight vehicle according to another embodiment.
FIG. 7 is a perspective view showing a work flight vehicle according to yet another embodiment.

### Best Mode for Carrying out the Invention

Hereinafter, a first embodiment of a work flight vehicle provided with a work device according to the present invention will be described with reference to the drawings. The description of the present embodiment is given on the assumption that an example of the work device is a work device 4 connected between a flight vehicle 2 and a mower 3 (an example of an object). However, the present invention is not limited to the following embodiment, and various changes are possible within the scope that does not depart from the gist of the invention.

### Basic Configuration of Work Flight Vehicle

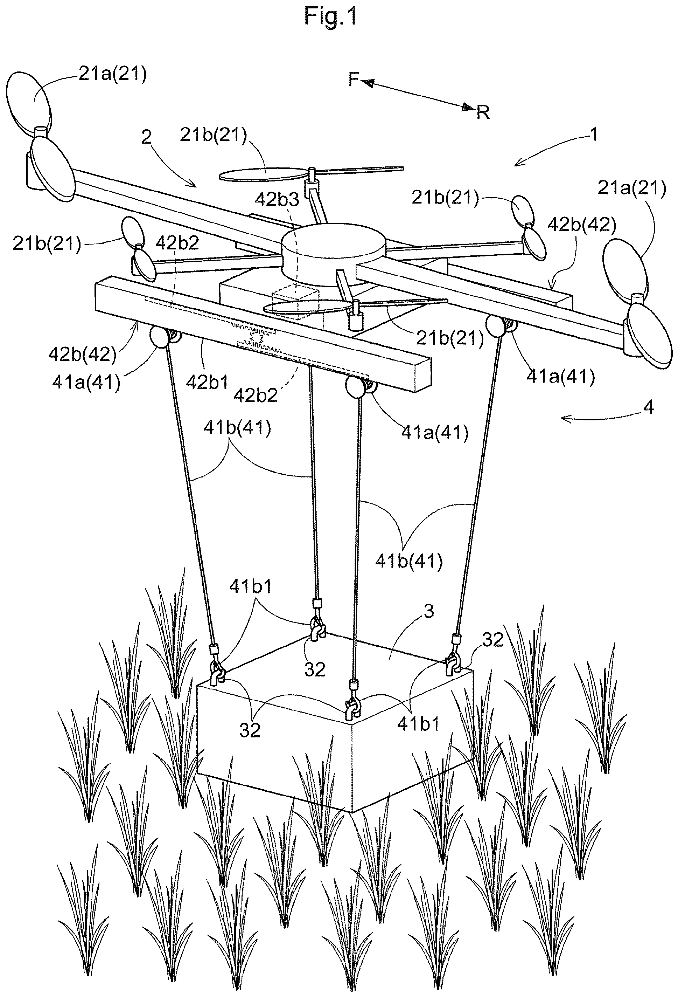

A device configuration of a work flight vehicle 1 according to the present embodiment is described. As shown in FIG. 1, the work flight vehicle 1 includes the flight vehicle 2, the mower 3, and the work device 4 connected between the flight vehicle 2 and the mower 3. While the work flight vehicle 1 is flying, the mower 3 is in a posture of being separated from the flight vehicle 2 by the work device 4. In this posture, the work flight vehicle 1 can bring the mower 3 into contact with slope ground to cause the mower 3 to perform mowing work. Note that, when referring to a front-rear direction in the following description, the direction indicated by the arrow F in FIG. 1 means "front" and the direction indicated by the arrow R means "rear", unless otherwise noted.

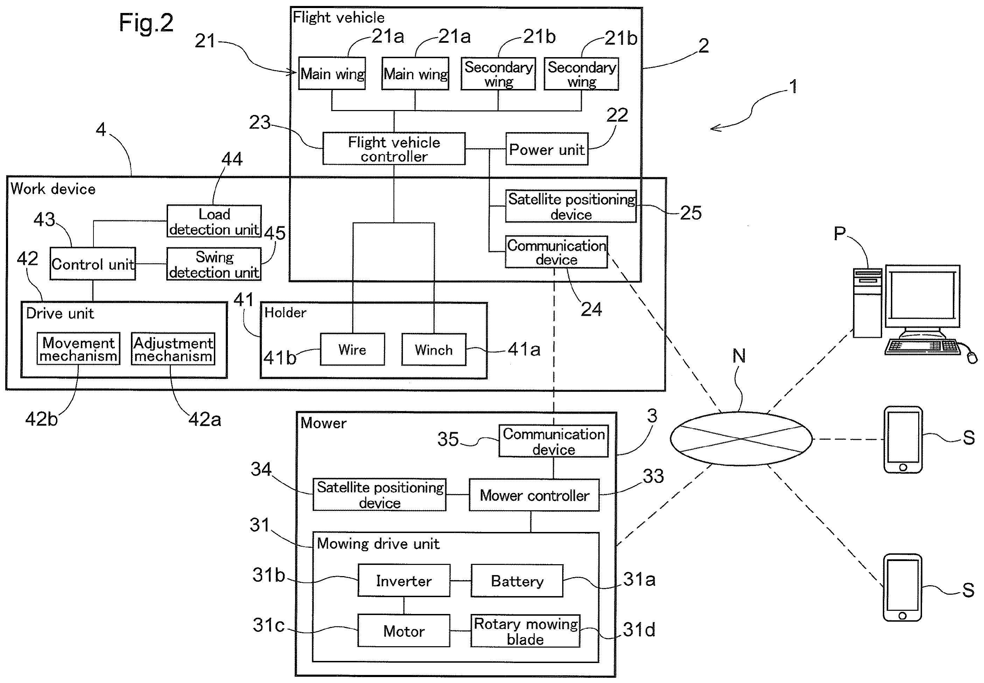

As shown in FIGS. 1 to 2, the flight vehicle 2 includes a propulsion device 21 (main wings 21a and secondary wings 21b), a power unit 22, a flight vehicle controller 23, a communication device 24, and a satellite positioning device 25. The propulsion device 21 is implemented as a plurality of (two in the present embodiment) main wings 21a and a plurality of (four in the present embodiment) secondary wings 21b. The two main wings 21a can change their postures between a propulsion mode, in which the rotary wings are oriented forward, and a hovering mode, in which the rotary wings are oriented upward. The four secondary wings 21b are mainly used to control the posture of the flight vehicle 2. In the propulsion mode, the flight vehicle 2 is likely to be propelled forward, and in the hovering mode, the flight vehicle 2 is likely to hover without changing its horizontal position. Note that the propulsion device 21 (the main wings 21a and the secondary wings 21b) may have a tail wing.

The power unit 22 is implemented as an electrically driven battery and/or an engine driven by fuel such as gasoline. The power unit 22 in the present embodiment includes an engine, a generator, and a battery. The generator generates electric power from power output from the engine and the generated electric power is stored in the battery. The propulsion device 21 operates with power output from the engine, electric power generated by the generator, or electric power stored in the battery. For example, the main wings 21a operate with power output from the engine, and the secondary wings 21b operate with electric power generated by the generator or electric power stored in the battery. The flight vehicle 2 operates the propulsion device 21 (the main wings 21a and the secondary wings 21b) using driving force generated by the power unit 22 and flies using propulsive force produced by the propulsion device 21 (the main wings 21a and the secondary wings 21b).

The flight vehicle controller 23 is implemented as a computer having an arithmetic processing unit and a storage device. The flight vehicle controller 23 is configured to be able to accept input of signals from various instruments provided in the flight vehicle 2 and output signals to control various components of the flight vehicle 2.

Examples of the instruments (not shown) provided in the flight vehicle 2 include, but are not limited to, instruments (a speedometer, an altimeter, and so on) that indicate the operational status of the flight vehicle 2 as a whole, instruments (tachometers for the main wings 21a and the secondary wings 21b, and so on) that indicate the operational status of the propulsion device 21 (the main wings 21a and the secondary wings 21b), and instruments (a remaining battery level gauge, and so on) that indicate the operational status of the power unit 22.

The communication device 24 is a communication interface to enable communication between the flight vehicle controller 23 and devices provided outside the flight vehicle 2. The flight vehicle controller 23 can communicate with a mower controller 33 of the mower 3 via the communication device 24. Also, the flight vehicle controller 23 can communicate with a computer P, smart phones S, and the like, which constitute slope ground management system that manages the slope ground where the work flight vehicle 1 performs work, via a mobile telephone network N.

The satellite positioning device 25 receives GNSS (Global Navigation Satellite System) signals from satellites, obtains positioning data indicating the position of the flight vehicle 2 based on the received signals, and transmits the positioning data to the flight vehicle controller 23. GPS, QZSS, Galileo, GLONASS, BeiDou, and the like can be used as GNSS.

The work device 4 for suspending the mower 3 (object) is connected to the underside of the flight vehicle 2 in the flying state. The expression "suspending the mower 3" means the state where the mower 3 is provided below the flight vehicle 2 in a weight direction thereof in a manner such that the flight vehicle 2 can change the posture of the mower 3. The work device 4 includes holders 41, a drive unit 42, and a control unit 43, and the work device 4 includes the communication device 24 and the satellite positioning device 25, which are connected to the flight vehicle 2 and can be shared with the flight vehicle 2. The work device 4 also includes a load detection unit 44 (an example of a posture detection unit) for detecting the load of the holders 41 and a swing detection unit 45 (an example of a posture detection unit) for detecting the swing of the mower 3. The work device 4 of the present embodiment uses the main wings 21a to generate lifting power to propel (rise, ascend, descend) and fly the flight vehicle 2, and uses the secondary wings 21b to control the posture of the flight vehicle 2. Note that the work device 4 may include the communication device 24 and the satellite positioning device 25 separately without sharing them with the flight vehicle 2, or may share later-described satellite positioning device 34 and communication device 35 of the mower 3 with the mower 3. The control unit 43 may be built in the flight vehicle controller 23 or the later-described mower controller 33, or may be provided on a server at a remote location.

The work device 4 is a unit that is connected to the flight vehicle 2 at one end and to the mower 3 at the other end. As a result of the flight vehicle 2 and the mower 3 being connected to each other via the work device 4, the mower 3 connected to the work device 4 takes a posture of being separated from the flight vehicle 2 when the work flight vehicle 1 is flying.

The holders 41 include a plurality of (four in the present embodiment) rope-like wires 41b that suspend and support the mower 3 and a plurality of (four in the present embodiment) winches 41a that extend and retract the wires 41b. Each of the winches 41a is individually provided for one wire 41b, and by the control unit 43 controlling the driving force of an adjustment mechanism 42a (e.g., motor) that rotates each winch 41a, the posture (length) of the corresponding wire 41b is adjusted separately. That is to say, by the adjustment mechanism 42a operating the winches 41a to adjust the amount of unreeling the rope-like wires 41b, it is possible to actively change the relative position of the flight vehicle 2 and the mower 3 connected via the wires 41b. Note that the holders 41 may also be composed of hydraulic, pneumatic, or electric extendable/retractable metal members, and in this case, the winches 41a may be omitted.

One end of each wire 41b is connected to the corresponding winch 41a, and this winch 41a is connected to the flight vehicle 2 via the movement mechanism 42b. The other end of each wire 41b is connected to the mower 3 using an engagement section 41b1 (e.g., a hook) that is fastened to one of a plurality of corners of the mower 3 (four corners in the present embodiment). The support load of the plurality of holders 41 is set to be larger than or equal to the weight of the mower 3, and the plurality of holders 41 bear the entire load of the mower 3. As a result, it is possible to avoid inconveniences such as falling of the mower 3, thereby making it possible to transport the mower 3 to slope ground without cutting the wires 41b. Also, the support load of each holder 41 is set to be larger than or equal to the weight of the mower 3, and the holders 41 are designed to withstand the load of the mower 3 even if the load is temporarily concentrated on one holder 41.

Each holder 41 is configured so that the connection angle between the winch 41a and the wire 41b can be adjusted. Furthermore, each of the winches 41a is configured to be movable in the horizontal direction by the movement mechanism 42b, and the plurality of holders 41 move in the horizontal direction with a winch 41a and a wire 41b being in one set. In other words, posture change is possible by the movement mechanism 42b widening or narrowing the maximum separation distances between the plurality of holders 41. The posture control of the adjustment mechanism 42a and the movement mechanism 42b is performed by the control unit 43 preferably when the flight vehicle 2 is in hovering flight. Also, the posture control may be performed not only during the normal flight of the flight vehicle 2, but also when the flight vehicle 2 comes to a sudden stop.

The drive unit 42 includes the adjustment mechanism 42a and the movement mechanism 42b. The adjustment mechanism 42a is composed of a motor that rotates and drives the winches 41a, and extends and retracts the wires 41b so as to change the postures of the holders 41 and counteracts the swing of the mower 3. The adjustment mechanism 42a also rotates and drives the winches 41a so that the wires 41b generates tension on the mower 3.

The movement mechanism 42b is formed of rectangular frame members fixed to the lower portion of the flight vehicle 2. The movement mechanism 42b includes a rail 42b1 that guides the horizontal movement of the winch 41a, a gear part 42b2 that moves the winch 41a along the rail 42b1, and a motor 42b3 that changes the position of the gear part 42b2 on the rail 42b1. Examples of the gear part 42b2 on the rail 42b1 include a rack and pinion that converts the rotational force of the motor 42b3 into a straight movement force. The movement mechanism 42b in the present embodiment is configured to change the position of each of the holders 41 separately using the gear part 42b2. Note that the movement mechanism 42b may be configured to move a pair of holders 41 or all of the holders 41 at the same time.

The control unit 43 is implemented as a computer having an arithmetic processing unit and a storage device. The control unit 43 controls driving of the adjustment mechanism 42a and the movement mechanism 42b. The control unit 43 is also configured to be able to accept input of signals from various instruments (e.g., the load detection unit 44) provided in the work device 4 and output signals to control various components of the work device 4.

The load detection unit 44 is constituted by a known load cell or the like that is connected to the engagement sections 41b1 provided at the other ends of the holders 41. The swing detection unit 45 is constituted by a known IMU sensor or the like that detects the swing of the mower 3, and in the present embodiment, the IMU sensor is fixed to the mower 3 and the control unit 43 receives signals of the IMU sensor. The swing detection unit 45 detects physical motion parameters such as acceleration, rotation, and position change of the mower 3. The swing detection unit 45 may be installed in the holder 41 to detect the swing of the mower 3, or the swing of the flight vehicle 2 itself may be detected by the swing detection unit 45.

The mower 3 includes a mowing drive unit 31, connected members 32, the mower controller 33, the satellite positioning device 34, and the communication device 35.

The mowing drive unit 31 includes a battery 31a, an inverter 31b, a motor 31c, and a rotary mowing blade 31d. Mowing is performed in response to a DC current from the battery 31a being converted into an AC current using the inverter 31b to drive the motor 31c, and the rotary mowing blade 31d being rotated by this motor 31c.

The connected members 32 are engaged sections with which the other ends of the respective wires 41b of the work device 4 are engaged. Each connected member 32 is constituted by a U-shaped block, hook hole, or the like that is engaged with the engagement section 41b1 on the other end side of the corresponding wire 41b. The connection structure between the connected member 32 and the wire 41b of the work device 4 is not particularly limited and may be a male-female engagement such as a socket and a plug, for example. In the present embodiment, four connected members 32 are provided at the respective corners on the top surface of the mower 3, corresponding to the four wires 41b of the work device 4. Each of the four connected members 32 may be equipped with a sensor capable of detecting that the other end of the corresponding wire 41b is connected.

The mower controller 33 is implemented as a computer having an arithmetic processing unit and a storage device. The mower controller 33 is configured to be able to accept input of signals from various instruments provided in the mower 3 and output signals to control various components of the mower 3.

Examples of the instruments to be provided in the mower 3 include, but are not limited to, instruments (a speedometer, and so on) that indicate the operational status of the mower 3 as a whole, and instruments (a mowing blade revolution indicator, a remaining battery level gauge, and so on) that indicate the operational status of the mowing drive unit 31.

The satellite positioning device 34 receives GNSS (Global Navigation Satellite System) signals from satellites, obtains positioning data indicating the position of the mower 3 based on the received signals, and transmits the positioning data to the mower controller 33. GPS, QZSS, Galileo, GLONASS, BeiDou, and the like can be used as GNSS.

The communication device 35 is a communication interface to enable communication between the mower controller 33 and devices provided outside the mower 3. The mower controller 33 can communicate with the flight vehicle controller 23 of the flight vehicle 2 via the communication device 35. Also, the mower controller 33 can communicate with the computer P, the smart phones S, and the like, which constitute the slope ground management system that manages the slope ground where the work flight vehicle 1 performs work, via the mobile telephone network N.

### Modification of Work Flight Vehicle

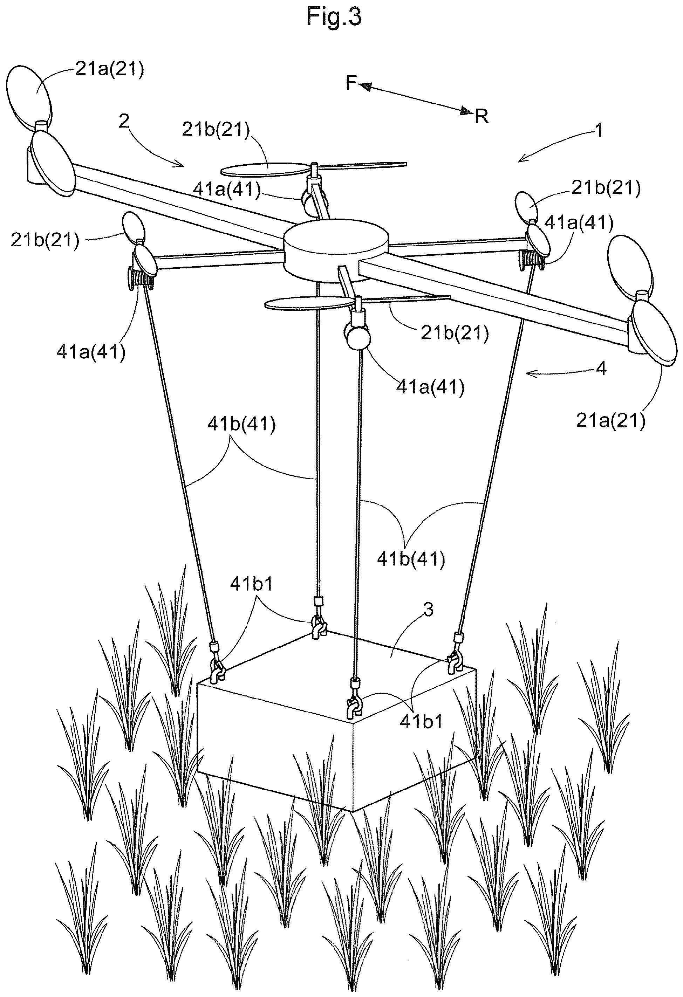

As shown in FIG. 3, the work flight vehicle 1 may not include the movement mechanism 42b used in the above-described embodiment. In this case, the winches 41a may be attached to the flight vehicle 2. Even in cases where the movement mechanism 42b is omitted, the holders 41 can be extended and retracted by the adjustment mechanism 42a to counteract the swing of the mower 3.

### Control Mode of Work Device

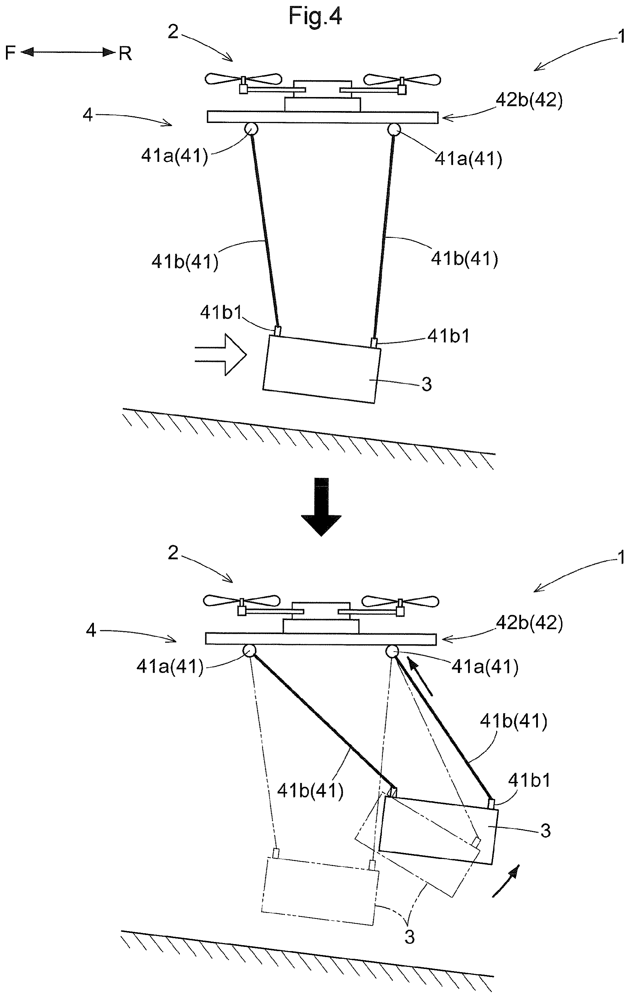

Hereinafter, the control mode the work device 4 is described with reference to FIGS. 4 to 5. The control unit 43 in the present embodiment controls the adjustment mechanism 42a to extend and retract the holders 41 (wires 41b) so as to counteract the swing of the mower 3. For example, as shown in FIG. 4, when an external force such as a strong wind acts on the mower 3 from the front to the rear of the work flight vehicle 1, the mower 3 swings so that the rear side thereof hangs down as shown in the dashed-two dotted lines in the lower figure. Therefore, the control unit 43 controls the adjustment mechanism 42a to reduce the length of the wire 41b located on the rear side and winds up the winch 41a. As a result, the mower 3 is positioned in a horizontal posture along the slope ground to counteract the external force exerted on the mower 3, as indicated by the solid line in the lower figure of FIG. 4. In this way, the control unit 43 controls the adjustment mechanism 42a so that the holders 41 (wires 41b) generate tension on the mower 3. In other words, since tension on the mower 3 always acts on the wires 41b of the work device 4, the holders 41 can bring the mower 3 into an appropriate posture. Specifically, even when the mower 3 swings from side to side due to strong winds or the like and the holder 41 in the swing direction is deflected, the loads on the holders 41 can be made uniform by retracting the deflected holder 41 and causing it to generate tension.

The control unit 43 also controls the adjustment mechanism 42a to extend or retract the holder 41 located in a direction in which the swing acceleration of the mower 3 detected by the swing detection unit 45 was changed. Specifically, the holder 41 located in the direction in which the swing acceleration was changed can effectively reduce the inertia force exerted on the mower 3, and thus it is possible to promptly suppress the swing of the mower 3. As shown in FIG. 4, by extending or retracting the holder 41 (holder 41 located on the rear side shown in FIG. 4) located in the direction in which the swing acceleration was changed in response to the mower 3 being blown away by strong winds, it is possible to reliably prevent the swing. Here, assuming that the satellite positioning device 25 of the flight vehicle 2 and the satellite positioning device 34 of the mower 3 are position detection units, it is preferable for the control unit 43 to detect the relative positions of the holders 41 and the mower 3 by receiving signals from the position detection units. If the relative positions of the holders 41 and the mower 3 are detected in this way, horizontal swings can be detected, and the control performance of the adjustment mechanism 42a is improved by controlling the adjustment mechanism 42a so that the center of support by the plurality of holders 41 matches the center of gravity of the mower 3.

When the flight vehicle 2 moves forward from hovering flight, for example, swing acceleration is generated in the mower 3 by the movement of the flight vehicle 2. Therefore, the control unit 43 may control the adjustment mechanism 42a to extend or retract the holder 41 located in the direction in which the swing acceleration of the mower 3 was changed, taking into account moving speed information of the flight vehicle 2 obtained from the instrument indicating the operational status of the flight vehicle 2. This can reliably counteract the swing of the mower 3 caused by the movement of the flight vehicle 2.

If the load detection unit 44 (load cell) functions as a posture detection unit, the control unit 43 may estimate the inclination of the mower 3 by taking into account information detected by the load detection unit 44 as the load applied to the holders 41, and may control the adjustment mechanism 42a so that the posture of the mower 3 is horizontal. Also, if the swing detection unit 45 (IMU sensor) functions as a posture detection unit, the control unit 43 may control the adjustment mechanism 42a so that the posture of the mower 3 is horizontal, taking into account information detected by the swing detection unit 45 as the inclination of the mower 3 itself. Note that instead of controlling the adjustment mechanism 42a so that the posture of the mower 3 is horizontal, the mower 3 itself may have an automatic posture correction function. In this case, the IMU sensor installed in the mower 3 itself may detect the inclination of the mower 3, and a moving member for correcting the shaft center position of an actuator of the mower 3 or adjusting the weight balance may be provided.

Furthermore, the control unit 43 preferably controls the adjustment mechanism 42a to increase the extension/retraction speeds of the holders 41 and/or improve the response of the holders 41, the less the mower 3 weighs. Since the adjustment mechanism 42a extends and retracts the holders 41 to counteract the swing of the mower 3, it is possible to perform stable mowing work when the work device 4 is attached to the work flight vehicle 1. Specifically, if the extension/retraction speeds of the holders 41 are increased and/or the response is improved the less the mower 3 weighs, the swing can be rapidly counteracted when the weight is small, and if the extension/retraction speeds of the holders 41 are decreased and/or the response is slowed down when the weight is large, it is possible to avoid a situation where sudden inertia force is applied to the mower 3 and the work device 4 loses control. In this way, stable work can be performed simply by extending and retracting the holders 41 (wires 41b), and thus it is possible to easily solve the inconvenience of not being able to transport the mower 3 to the destination and start work.

The control unit 43 preferably controls the adjustment mechanism 42a to extend and retract the holders 41 so that the support loads by the respective holders 41 detected by the load detection unit 44 are uniform. If the support loads of the plurality of holders 41 are made uniform, there is no need to set excessively large support forces for the holders 41, realizing lighter holders 41. In addition, since the holders 41 are simply extended or retracted to achieve uniform support loads, control is simple.

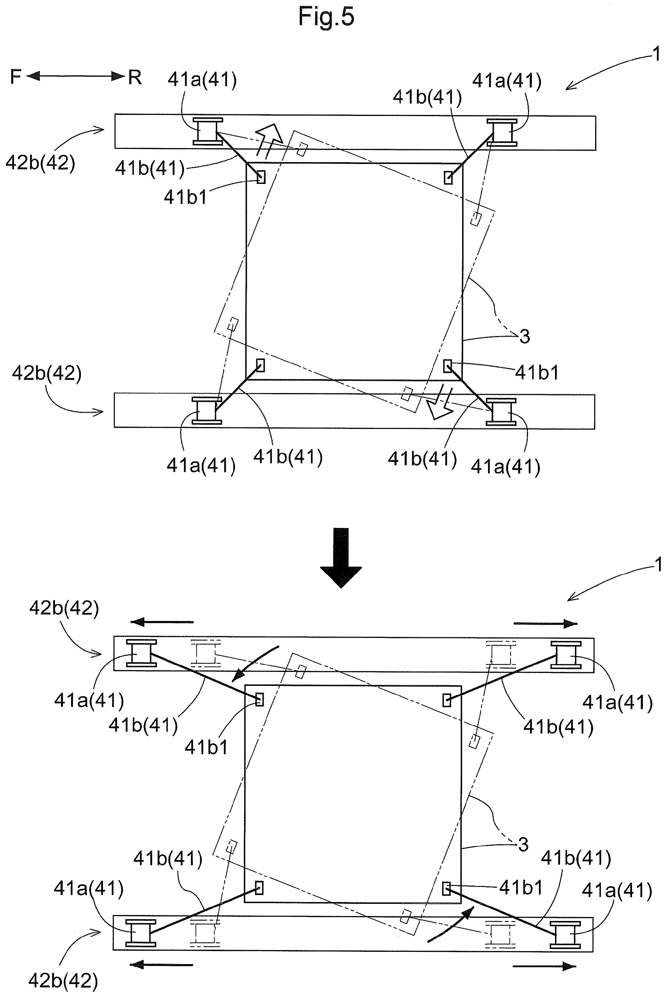

As described above, the work device 4 of the present embodiment is configured so that the connection angle between the winch 41a and the wire 41b can be adjusted. Therefore, if the amount of swing of the mower 3 detected by the swing detection unit 45 is greater than or equal to a predetermined value, the control unit 43 controls the movement mechanism 42b to increase the maximum separation distance between the plurality of holders 41. As indicated by the dashed-two dotted lines in FIG. 5, for example, when the mower 3 is rotated with the swing axis oriented in the vertical direction, the maximum separation distance between the plurality of holders 41 is increased if the amount of swing is greater than or equal to the predetermined value. For example, as indicated by the solid lines in FIG. 5, by spreading the four holders 41, the inertia force associated with the swing of the mower 3 can be reduced. If the swings shown in FIGS. 4 to 5 occur at the same time, by controlling the movement mechanism 42b to adjust the horizontal positions of the plurality of holders 41 individually, the control unit 43 preferably controls the adjustment mechanism 42a so that the center of support by the plurality of holders 41 matches the center of gravity of the mower 3. With the control so that the support center of the plurality of holders 41 matches the center of gravity of the mower 3, it is possible to avoid such an inconvenience of balance lost due to the swing of the mower 3. Thus, by changing the connection angles between the winches 41a and the wires 41b according to the amount of swing of the mower 3, it is possible to reduce the inertia force associated with the swing of the mower 3. As a result, oscillation of the work device 4 transmitted by the swing of the mower 3 can be suppressed.

### Other Embodiments

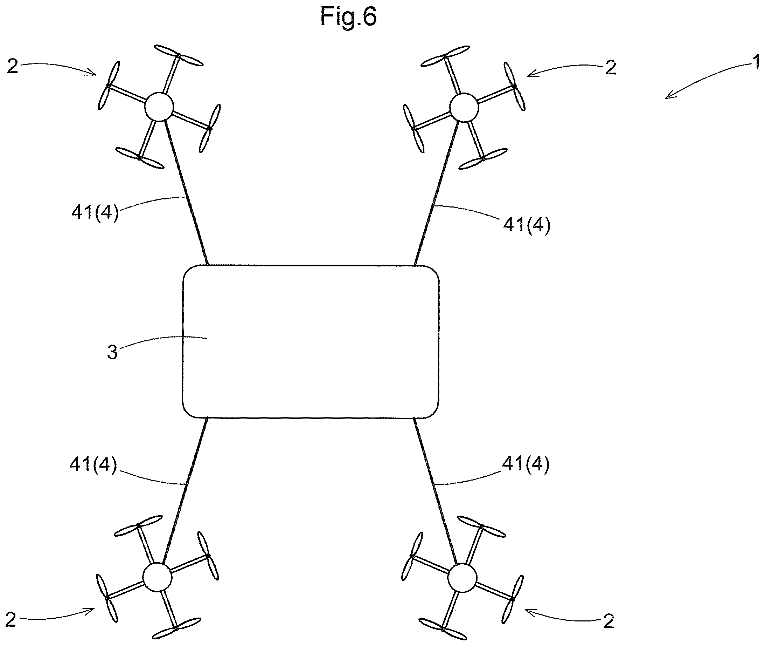

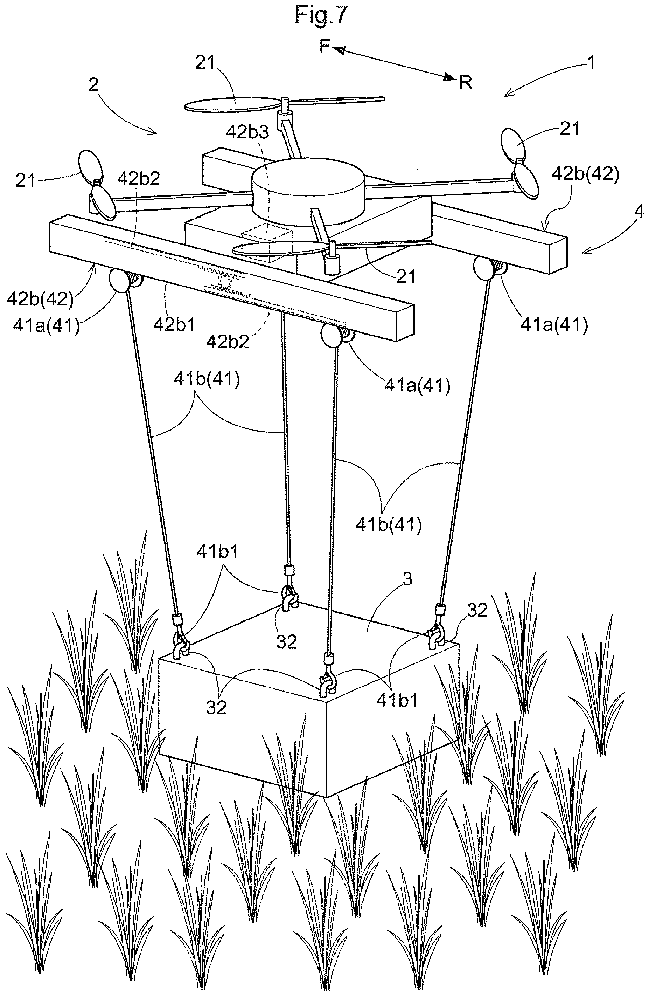

(1) The above-described embodiment has taken an example in which the work device 4 is connected to one flight vehicle 2, but as shown in FIG. 6, a plurality of flight vehicles 2 may be connected respectively to the holders 41. In this case, by changing the relative position of the flight vehicles 2, the function of the above-described movement mechanism 42b can be achieved. Also, as shown in FIG. 7, the propulsion device 21 may consist only of a plurality of main wings, and in this case, the plurality of main wings will also have the posture change function. The numbers of main wings 21a and secondary wings 21b in the above-described embodiment are not limited, and eight secondary wings 21b may be provided, for example.
(2) The components constituting the work device 4 may be designed to be usable in various forms of work flight vehicles 1. For example, the connection structure between the work device 4 and the flight vehicle 2 may be designed to have a common standard for various types of flight vehicles 2. Also, for example, the connection structure between the work device 4 and the mower 3 may be designed to have a common standard for various types of mowers 3.
(3) The main wings 21a of the flight vehicle 2 may be configured so that the rotary shafts of the main wings 21a are rotatable about an axis extending in the left-right direction of the flight vehicle body. In other words, the main wings 21a may be of a so-called tilt type, enabling vertical landing, hovering flight, and high-speed horizontal flight.
(4) A work result acquisition unit configured to acquire the results of work in the work device 4 may be provided. With this, it is possible to create a work plan for post-processes and a work plan for the next and subsequent years. If this work plan is stored in a management server, the work plan can be used for mowing work on various locations on slope ground.
(5) In the above-described embodiment, the holders 41 are respectively provided at the four corners of the mower 3, so that a four-point suspension is formed, but the holders 41 may be provided in a three-point suspension form at two corners of the mower 3 and the center of the opposite side, and there is no particular limitation as long as the number of points of suspension is two or more.
(6) Although the winches 41a of the holders 41 are provided on the flight vehicle 2 side, the winches 41a may be provided on the mower 3 side, and the mower 3 may be suspended by the holder 40b or the wires 41b extending from the flight vehicle 2.
(7) In the above-described embodiment, the mower 3 is exemplified as an object, but the object may be luggage, a chemical spraying device, a snow removal device, a seedling planting device, a combine harvester, a warning device, a plowing and weeding device, or the like, and the object connected to the work device 4 is not particularly limited.
(8) In the above-described embodiment, the work device 4 is used in the work flight vehicle 1, but the work device 4 may be used in, for example, construction work and civil engineering work using cranes and the like.

Note that the configurations disclosed in the above-described embodiments (including other embodiments, the same applies hereinafter) can be applied in combination with the configurations disclosed in other embodiments, as long as no contradiction arises. The embodiments disclosed in the present specification are examples, and the embodiments of the invention are not limited thereto and can be modified as appropriate within the scope that does not depart from the purpose of the present invention.

### Industrial Applicability

The present invention is applicable to a work device connectable to a flight vehicle or the like, and a work flight vehicle.

### Description of Reference Signs

- 1:: Work flight vehicle
- 2:: Flight vehicle
- 3:: Mower (object)
- 4:: Work device
- 25:: Satellite positioning device (position detection unit)
- 34:: Satellite positioning device (position detection unit)
- 41:: Holder
- 41a:: Winch
- 41b:: Wire
- 42a:: Adjustment mechanism
- 42b:: Movement mechanism
- 43:: Control unit
- 44:: Load detection unit (posture detection unit)
- 45:: Swing detection unit (posture detection unit)

## Claims

1. A work device from which an object is capable of being suspended, comprising:
a plurality of holders configured to hold the object in such a manner that the object is suspended;
an adjustment mechanism configured to adjust respective postures of the plurality of holders; and
a control unit configured to control operation of at least the adjustment mechanism,
wherein the control unit controls the adjustment mechanism to change the respective postures of the holders so as to counteract swinging of the object.

2. The work device according to claim 1,
wherein the control unit controls the adjustment mechanism so that the holders generate tension on the object.

3. The work device according to claim 1 or 2, further comprising:
a swing detection unit configured to detect swinging of the object.

4. The work device according to claim 3,
wherein the control unit causes extension and contraction of a holder among the plurality of holders which holder is present in a direction of a change in swing acceleration of the object which swing acceleration has been detected by the swing detection unit.

5. The work device according to claim 3 or 4, further comprising:
a movement mechanism configured to move the plurality of holders in a horizontal direction,
wherein the control unit controls the movement mechanism to increase a maximum separation distance between the plurality of holders in response to an amount of swing of the object which amount of swing has been detected by the swing detection unit being greater than or equal to a predetermined value.

6. The work device according to any one of claims 1 to 5, further comprising:
a position detection unit configured to detect respective positions of the holders and the object relative to each other.

7. The work device according to any one of claims 1 to 6, further comprising:
a posture detection unit configured to detect a posture of the object,
wherein the control unit causes adjustment of the respective postures of the holders with reference to detection information from the posture detection unit.

8. The work device according to any one of claims 1 to 7,
wherein the control unit controls the adjustment mechanism to extend and contract the holders at a speed lower as the object weighs less.

9. A work flight vehicle comprising:
the work device according to any one of claims 1 to 8; and
a flight vehicle,
wherein the control unit causes adjustment of the respective postures of the holders with reference to moving speed information of the flight vehicle.
